# FASCICULE DE BREVET EUROPEEN

(11) **EP 1 543 535 B1**
(45) Date de publication et mention de la délivrance du brevet: **08.07.2015**
(21) Numéro de dépôt: 03776943.7
(22) Date de dépôt: 26.09.2003
(51) Int. Cl.: H01H 1/00

(54) **PROCÉDÉ DE RÉALISATION DES MICROCOMMUTATEURS A ACTUATION ELECTROSTATIQUE A FAIBLE TEMPS DE REPONSE ET A COMMUTATION DE PUISSANCE**
HERSTELLUNGSVERFAHREN EINES ELEKTROSTATISCH BETRIEBENEN MIKROSCHALTERS MIT KURZER ANTWORTZEIT UND LEISTUNGSUMSCHALTUNG
METHOD OF MANUFACTURE OF ELECTROSTATICALLY ACTUATED LOW RESPONSE TIME POWER COMMUTATION MICRO-SWITCHES

(30) Priorité: 27.09.2002 FR 0212007
(43) Date de publication de la demande: 22.06.2005
(73) Titulaire: Thales, 92200 Neuilly Sur Seine (FR)
(72) Inventeur: Ziaei, Afshin, Thales Intellectual Property, F-94117 Arcueil cedex (FR); Dean, Thierry, Thales Intellectual Property, F-94117 Arcueil cedex (FR); Polizzi, Jean-Philippe, F-94117 Arceuil Cedex (FR)
(74) Mandataire: Esselin, Sophie
(86) Numéro de dépôt international: PCT/FR2003/002835
(87) Numéro de publication internationale: WO 2004/030005

(56) Documents cités:
- EP-A- 0 520 407
- US-A- 5 619 061
- US-A1- 2002 005 341
- LIU Y ET AL: "HIGH-ISOLATION BST-MEMS SWITCHES" 2002 IEEE MTT-S INTERNATIONAL MICROWAVE SYMPOSIUM DIGEST.(IMS 2002). SEATTLE, WA, JUNE 2 - 7, 2002, IEEE MTT-S INTERNATIONAL MICROWAVE SYMPOSIUM, NEW YORK, NY: IEEE, US, vol. 1 OF 3, 2 juin 2002 (2002-06-02), pages 227-230, XP001099478 ISBN: 0-7803-7239-5
- DATABASE WPI Section Ch, Week 200209 Derwent Publications Ltd., London, GB; Class L03, AN 2002-065081 XP002240983 & KR 2001 038 214 A (LG ELECTRONICS INC), 15 mai 2001 (2001-05-15)

## Description

Le domaine de l'invention est celui des composants microsystèmes encore appelés MEMS (acronyme pour Micro Electro Mechanical Systems) et plus particulièrement des microcommutateurs radiofréquence ou hyperfréquence intégrant une membrane déformable sous l'action d'un champ électrostatique. Les domaines d'applications principaux sont les systèmes de télécommunications sans fils et les radars.

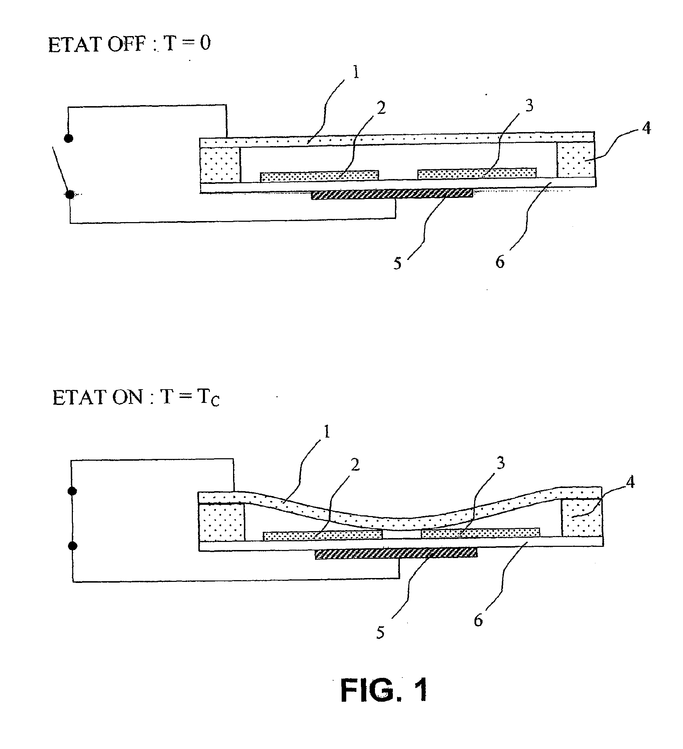

Les composants microsystèmes se sont développés depuis quelques années à partir des technologies mises en oeuvre pour la réalisation des circuits électroniques. Le schéma de principe d'un microcommutateur est donné en figure 1. Une membrane ou une poutre métallique 1 de faible épaisseur est maintenue suspendue par des supports 4 au-dessus de surfaces conductrices 2 et 3 isolées entre elles. Une électrode de commande 5 placée sous les surfaces conductrices et éventuellement séparée desdites surfaces conductrices par une couche isolante 6 complète le dispositif. L'ensemble membrane - électrode de commande est soumis à une tension électrique T au moyen de l'électrode de commande 5. En l'absence de tension appliquée, la membrane est suspendue au-dessus des surfaces conductrices et il n'y a aucun contact électrique entre celles-ci (Etat OFF). Dans ce cas, aucun signal électrique ne peut passer entre 2 et 3. Lorsque l'on soumet l'ensemble membrane - électrode à une tension T croissante, la membrane est soumise à une force électrostatique qui la déforme jusqu'à ce que la membrane entre en contact avec les surfaces conductrices pour une tension T_{c}. Le signal électrique passe alors de 2 à 3 (Etat ON). On réalise ainsi un microcommutateur.

En général, on n'utilise pas les microcommutateurs MEMS radiofréquence ou hyperfréquence en interrupteur simple. En effet, le contact direct entre la membrane et les surfaces conductrices ou l'électrode de commande diminue notablement la durée de vie du dispositif. On interpose entre les surfaces et la membrane une couche de diélectrique. On transforme ainsi la fonction simple ON/OFF en variation de capacité d'un condensateur dont les armatures sont constituées d'une part de la membrane et d'autre part de l'électrode de commande en regard. La capacité varie alors d'une valeur Cₒₙ à une valeur C_{off}.

Ce type de dispositif représente une avancée technique majeure par rapport aux dispositifs électroniques classiques fonctionnant notamment à partir de diodes PIN (acronyme pour Positive-Intrinsic-Negative) dès que la vitesse de commutation n'est plus un paramètre majeur, c'est à dire dès que le temps de commutation recherché peut rester supérieur à quelques microsecondes.

Les principaux avantages de ce type de dispositif sont essentiellement :
- Les techniques de réalisation qui sont dérivées des technologies classiques de fabrication de circuits intégrés électroniques. Elles permettent de simplifier la réalisation et l'intégration et par conséquent, d'obtenir des coûts de fabrication faibles comparés à ceux d'autres technologies, tout en garantissant une fiabilité élevée ;
- Les très faibles puissances électriques consommées, quelques nanojoules étant nécessaires à l'activation ;
- L'encombrement. On réalise ainsi un microcommutateur dans une surface de l'ordre du dixième de millimètre carré, permettant d'atteindre une forte capacité d'intégration ;
- Les performances en utilisation hyperfréquence. Ce type de microcommutateur présente des pertes d'insertion très faibles, de l'ordre du dixième de déciBel, bien inférieures à celles de dispositifs assurant les mêmes fonctions.

En général, la membrane supérieure déformable est réalisée par dépôt sur un substrat de base d'une ou plusieurs couches de matériaux, au moins l'une de ces couches étant un matériau conducteur. Ces matériaux sont ceux habituellement utilisés en micro-électronique.

Un example de ce dispositif est décrit dans le document US 2002/0005341.

Le principal inconvénient de cette technique est que les couches déposées sont nécessairement de faible épaisseur, l'empilement des couches atteignant au mieux quelques microns, ce qui limite la puissance radiofréquence susceptible de transiter par la membrane ainsi réalisée. De plus, la faible épaisseur de la membrane la rend relativement souple, ce qui induit des temps de commutation assez élevés, en général supérieurs à la dizaine de microsecondes.

La recherche de vitesses de commutation plus élevées ou de tenues en puissance plus importantes nécessitent donc l'emploi d'une membrane ou d'une poutre 1 plus épaisse. Malheureusement, la rigidité accrue de la membrane nécessite alors une force plus importante pour la déplacer, et par conséquent une tension d'actionnement également plus importante.

L'invention propose un procédé de réalisation original permettant d'obtenir un microcommutateur supportant une puissance radiofréquence RF significative et possédant de faibles temps de réponse tout en conservant des tensions de commande de l'ordre de quelques volts à quelques dizaines de volts.

Le dispositif selon l'invention comporte d'une part une membrane épaisse séparée par une faible distance de l'électrode de commande, et d'autre part une couche diélectrique à forte permittivité diélectrique, de l'ordre de plusieurs centaines. Ledit dispositif permet d'obtenir à la fois une meilleure tenue en puissance et un faible temps de commutation grâce à la structure de la membrane, tout en conservant des tensions de commande normales grâce à la forte permittivité de la couche diélectrique. En effet, un faible déplacement de la membrane entraîne des variations relatives de capacité Cₒₙ/C_{off} importantes. De plus, la membrane étant réalisée dans un matériau massif, sa fiabilité mécanique est supérieure à celle de dispositifs comprenant plusieurs couches.

Pour réaliser cette architecture, la membrane mobile est réalisée sur un substrat indépendant puis rapportée sur le substrat principal comportant les surfaces conductrices. Il reste alors, une fois l'assemblage fait, à découper le substrat de la membrane pour l'amener à la formé souhaitée.

Plus précisément, un microcommutateur à actuation électrostatique de type condensateur est composé de deux armatures dont la première est une membrane flexible et la seconde comporte au moins une électrode de commande en tension, les deux armatures étant séparées par une épaisseur de vide ou de gaz et au moins une couche d'au moins un matériau isolant caractérisé en ce que la membrane flexible comporte au moins une couche épaisse de matériau massif dont l'épaisseur vaut au moins environ un micron et qu'au moins le matériau isolant a une permittivité relative supérieure à plusieurs dizaines. Avantageusement, la permittivité relative dudit matériau est supérieure à cent et ledit matériau à forte permittivité est un ferroélectrique perovskite tel que le PZT ( Titanate de Zirconium Plomb), le BST ((Ba,Sr)TiO3 : Titanate de Baryum Strontium) ou le PMN (Niobate de Magnésium Plomb).

Avantageusement, la couche épaisse de matériau de la membrane est de type SOI (silicium sur isolant).

La membrane flexible est maintenue au-dessus de la seconde armature par au moins un pilier. Lorsque la membrane comporte un seul pilier, elle est du type poutre ou cantilever, lorsque la membrane comporte au moins deux piliers, elle est du type pont.

Une des applications principales de ce type de microcommutateur est leur utilisation dans le domaine des hyperfréquences. Il existe deux types principaux de microcommutateurs assurant cette fonction, les microcommutateurs sont soit de type série, soit de type parallèle. Lorsque les microcommutateurs sont de type série, l'application d'une tension sur l'électrode de commande le fait passer de l'état OFF à l'état ON. Lorsque les microcommutateurs sont de type parallèle, l'application d'une tension sur l'électrode de commande le fait passer de l'état ON à l'état OFF.

Dans le cas d'un microcommutateur de type parallèle, il comprend au moins :
- Un substrat isolant ;
- deux lignes conductrices situées sur ledit substrat, lesdites lignes dites lignes-masse parallèles entre elles et reliées électriquement à une masse électrique ;
- une membrane comprenant au moins la couche de matériau et au moins une couche électriquement conductrice, perpendiculaire aux dites lignes-masse, les reliant électriquement entre elles et suspendue par au moins un pilier au-dessus de la zone située entre les lignes-masse ;

- une couche de matériau diélectrique à forte permittivité ;
- une ligne conductrice dite signal d'entrée placée entre les lignes-masse, parallèle auxdites lignes-masse et interrompue sous la membrane ;
- une ligne conductrice dite signal de sortie placée dans le prolongement de la ligne signal d'entrée et entre les lignes-masse, parallèle auxdites lignes-masse et interrompue sous la membrane ;
- Une électrode de commande située sur ledit substrat dont une des extrémités placée sous la membrane relie électriquement les lignes signal d'entrée et signal de sortie.

Dans le cas d'un microcommutateur de type série, il comprend au moins :
- Un substrat isolant
- une couche de matériau diélectrique à forte permittivité ;
- une membrane comprenant au moins la couche de matériau et au moins une couche électriquement conductrice suspendue au-dessus du substrat isolant par au moins un pilier ;
- une ligne conductrice dite signal d'entrée interrompue sous la membrane ;
- une ligne conductrice dite signal de sortie placée dans le prolongement de la ligne signal d'entrée, interrompue sous la membrane ;
- Une électrode de commande située sur ledit substrat dont une des extrémités placée sous la membrane est située entre les lignes signal d'entrée et signal de sortie.

Dans un premier mode de réalisation du microcommutateur, la couche de matériau diélectrique à forte permittivité est placée sur la membrane en regard du substrat isolant. Bien entendu, il est également possible de déposer ladite couche sur les lignes conductrices situées sur le substrat isolant.

Avantageusement, le substrat isolant comportant les lignes conductrices est en silicium recouvert d'une couche isolante de silice, en verre ou en Arséniure de Gallium ; l'électrode de commande est en alliage de titane et de tungstène, ladite électrode peut être recouverte d'un matériau isolant qui peut être du nitrure de silicium ou de l'oxyde de silicium.

Préférentiellement, les différentes lignes conductrices sont réalisées par dépôt d'or, lesdites lignes conductrices ont une largeur commune d'environ cinquante microns. Dans le cas d'un microcommutateur de type parallèle, les lignes-masse sont séparées l'une de l'autre d'environ cent cinquante microns.

Avantageusement, la membrane comporte au moins une couche en alliage de titane, de platine, de tungstène, d'aluminium ou d'or, la couche à forte permittivité a une épaisseur d'environ un micron, la membrane est séparée de la seconde armature du condensateur à l'état OFF par une épaisseur de vide ou de gaz d'environ un micron, la forme générale de la membrane est un parallélépipède rectangle. Pour améliorer les performances du dispositif ou sa fiabilité, cette forme générale peut posséder plusieurs variantes.

Avantageusement, la longueur du parallélépipède est d'environ cent microns, sa largeur d'environ trois cents microns et son épaisseur quelques microns.

Le procédé de réalisation du microcommutateur selon la revendication 1 comporte au moins les étapes suivantes :
- Réalisation d'un premier sous-ensemble comportant un premier substrat et au moins les lignes conductrices et !'électrode de commande ;
- Réalisation d'un second sous-ensemble comportant au moins la couche épaisse de matériau constituant la membrane finale, au moins la couche électriquement conductrice et au moins la couche à haute permittivité ;
- Assemblage mécanique et électrique des deux sous-ensembles ;
- Découpe finale du second sous-ensemble aux dimensions de la membrane par photolithographie et gravure.

Avantageusement, la couche à haute permittivité est déposée par un procédé de type sol-gel ou par pulvérisation cathodique.

Il existe plusieurs mises en oeuvre possibles dudit procédé de réalisation.

Dans une première mise en oeuvre, le premier substrat du premier sous-ensemble comporte des surépaisseurs appelées mesas et une couche isolante, chaque mesa étant recouverte d'une épaisseur de métal identique à celle des lignes conductrices et la couche conductrice du second sous-ensemble comporte en regard des mesas.des surépaisseurs réalisées dans le même matériau que la couche à haute permittivité et d'épaisseur identique. Ces mesas sont destinées à servir d'entretoises lors du scellement des deux substrats et leur hauteur permet d'ajuster la distance entre l'électrode de commande du dispositif et la couche diélectrique à haute permittivité.

L'assemblage des deux sous-ensembles est réalisé par dépôt et soudure d'un alliage eutectique. Dans le cas d'un microcommutateur de type parallèle, le dépôt de cet alliage est effectué entre les lignes de masse du premier sous-ensemble et les couches conductrices du second sous-ensemble, les surépaisseurs du second sous-ensemble reposant alors sur les mesas du premier sous-ensemble. L'alliage eutectique peut être de type Or/Etain. Lors de l'opération de découpe, la membrane est libérée desdites mesas qui n'ont plus d'utilité fonctionnelle.

Dans une deuxième mise en oeuvre, un dépôt de métal déformable est réalisé sur certaines zones du premier sous-ensemble. Dans le cas d'un microcommutateur de type parallèle, ces zones sont situées sur les lignes-masses du premier sous-ensemble, Ledit matériau déformable est soit de l'or, soit un alliage eutectique Or/Etain. Dans ce cas, la réalisation du second sous-ensemble comprend alors les sous-étapes suivantes :
- Réalisation dudit second sous-ensemble qui comprend le premier substrat, au moins une couche d'arrêt et la couche de matériau constituant la membrane finale ;
- Gravure localisée dudit sous-ensemble de façon à créer au moins un pilier ;
- Dépôt sur la partie gravée d'au moins la couche électriquement conductrice et d'au moins la couche à haute permittivité.

L'assemblage des deux sous-ensembles est réalisé par soudure anodique des deux sous-ensembles, au niveau du ou des piliers gravés. La liaison électrique entre les deux sous-ensembles se fait alors au niveau des zones métalliques déformables déposées localement.

Dans cette seconde mise en oeuvre, le premier substrat est préférentiellement en verre.

Sauf applications particulières, les microcommutateurs sont réalisés collectivement. Industriellement, pour diminuer les coûts et homogénéiser les caractéristiques finales des microcommutateurs, on réalise simultanément une pluralité de composants en utilisant des technologies de réalisation collective à base de wafers. Dans ce cas, une première pluralité de sous-ensembles comportant les lignes conductrices est réalisée sur un premier wafer, une seconde pluralité de sous-ensembles comportant les membranes est réalisée sur un second wafer, les deux wafers sont ensuite assemblés et l'ensemble obtenu est ensuite découpé pour obtenir une pluralité de microcommutateurs.

L'invention sera mieux comprise et d'autres avantages apparaîtront à la lecture de la description qui va suivre, donnée à titre non limitatif et grâce aux figures annexées parmi lesquelles :
- la figure 1 représente le principe général de fonctionnement d'un microcommutateur selon l'art connu, l'état OFF et l'état ON du dispositif sont représentés ;
- la figure 2a représente le schéma général du dispositif à l'état OFF dans le cas d'un microcommutateur de type série ;
- la figure 2b représente le schéma général du dispositif à l'état ON dans le cas d'un microcommutateur de type parallèle ;
- les figures 3, 4, 5 et 6 représentent les différentes étapes du procédé de réalisation de microcommutateur de type parallèle selon un premier mode de réalisation ;

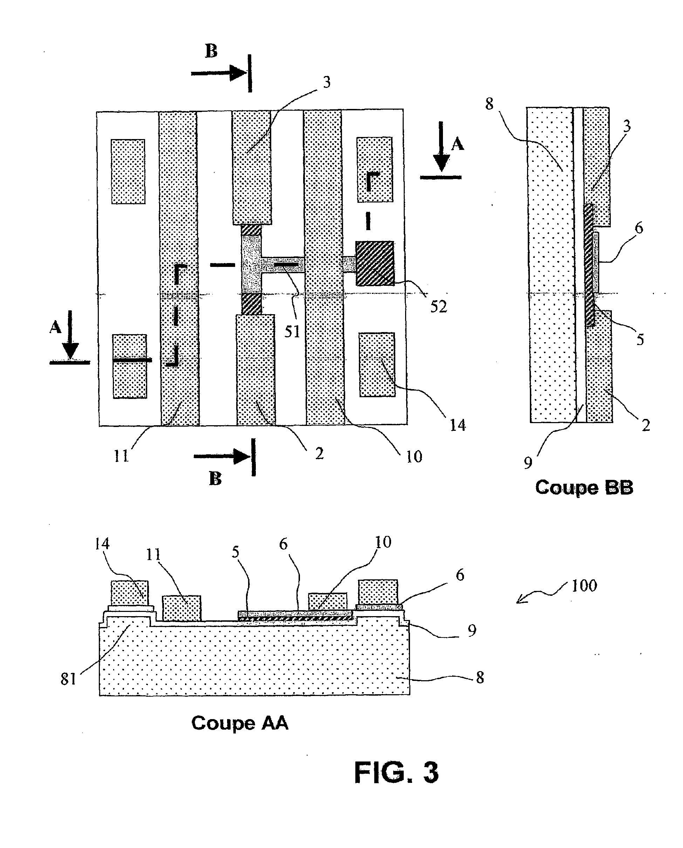

- la figure 3 représente trois vues du premier sous-ensemble avant assemblage ;

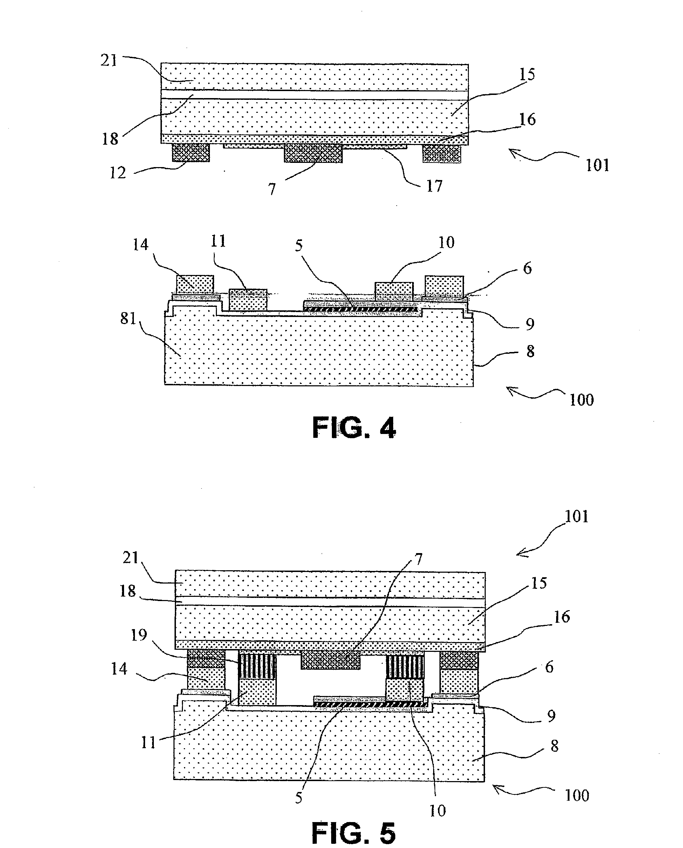

- la figure 4 représente une vue en coupe des deux sous-ensembles avant assemblage ;
- la figure 5 représente une vue en coupe des mêmes deux sous-ensembles après assemblage ;

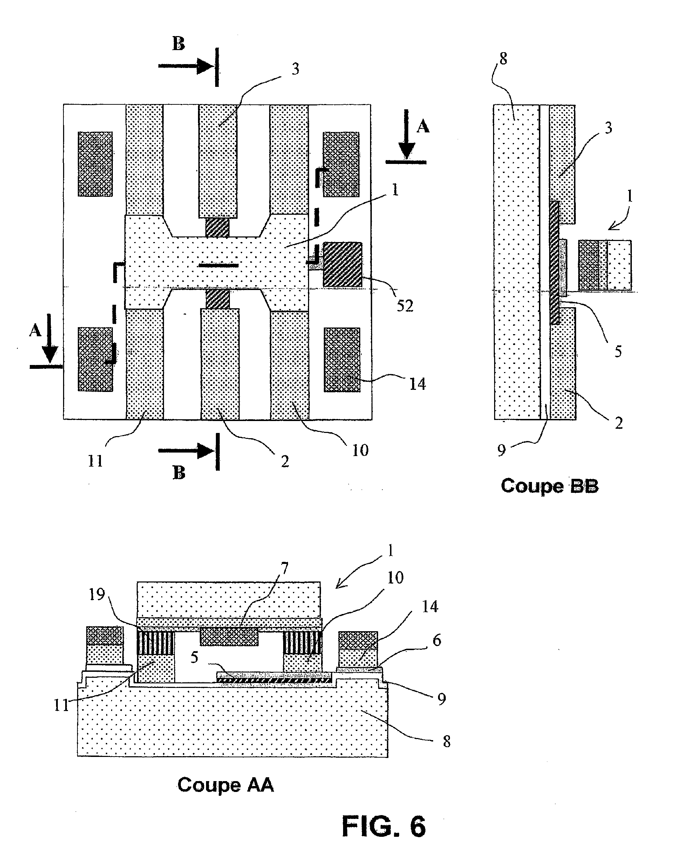

- la figure 6 représente trois vues du microcommutateur après assemblage et découpe finale ;

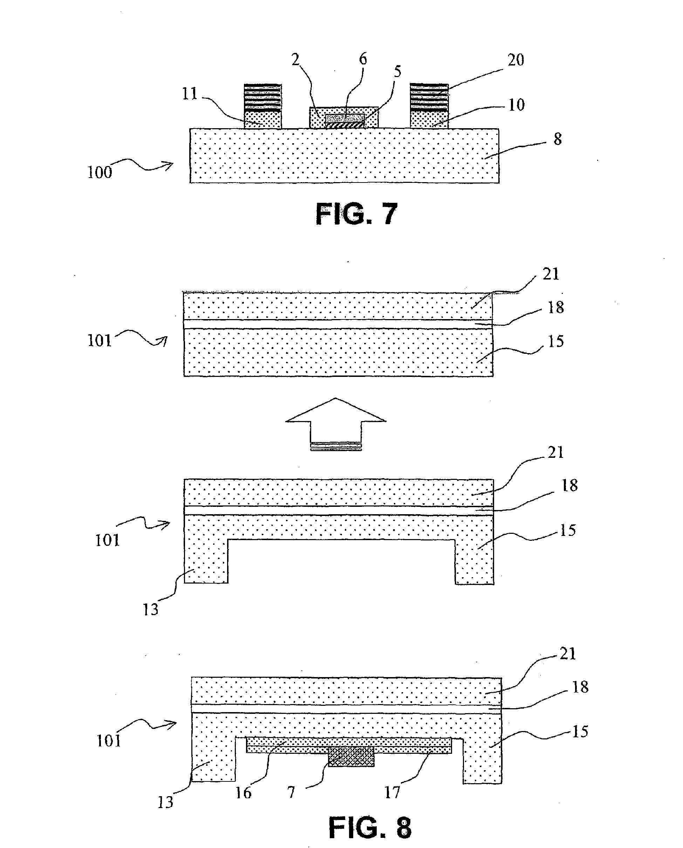

- les figures 7, 8 et 9 représentent les différentes étapes du procédé de réalisation de microcommutateur de type parallèle selon un second mode dé réalisation ;
- la figure 7 représente une vue du premier sous-ensemble avant assemblage ;
- la figure 8 représente les trois étapes principales du procédé de réalisation du second sous-ensemble ;

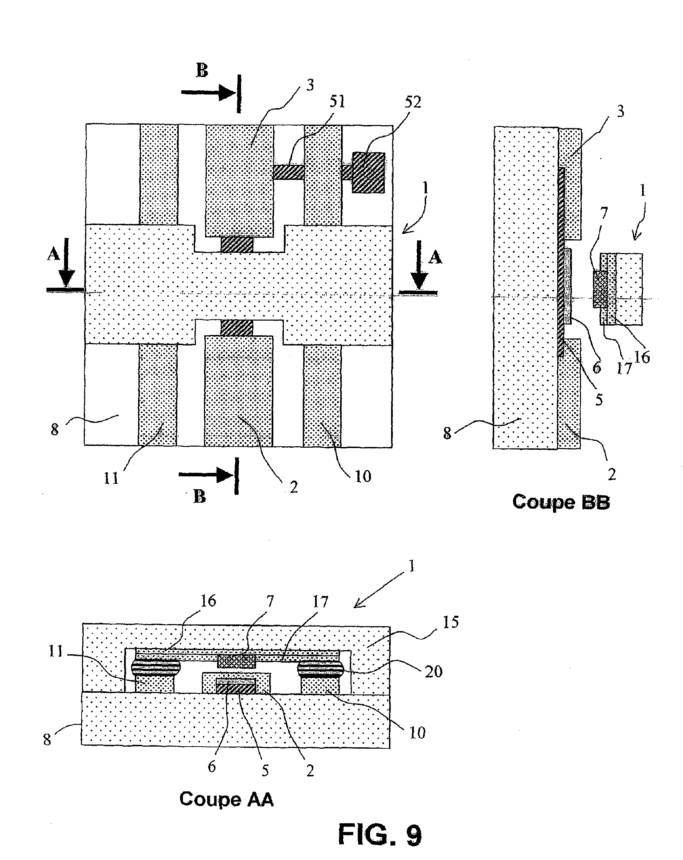

- la figure 9 représente trois vues du microcommutateur après assemblage et découpe finale.

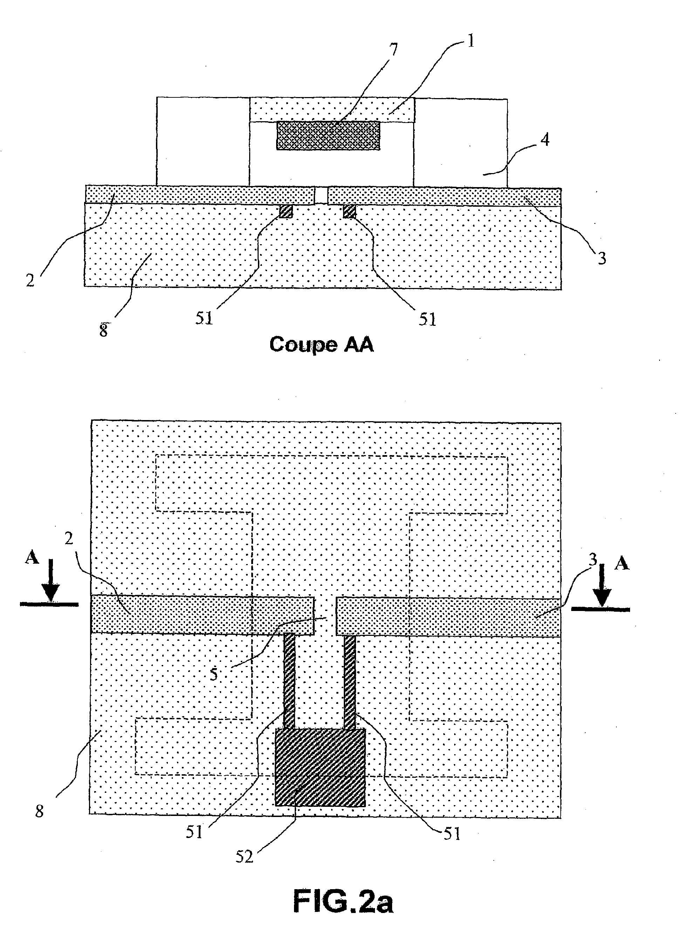

La figure 2a représente une vue en coupe et une vue de dessus du principe du dispositif dans le cas d'un microcommutateur de type série. Sur la vue de dessus et par souci de clarté, seul le contour de la membrane est représenté en pointillés. Une membrane ou une poutre métallique épaisse 1 est maintenue suspendue par des supports 4 au-dessus d'une première ligne conductrice 2 dite ligne d'entrée et d'une seconde ligne conductrice 3 dite ligne de sortie, isolées entre elles et disposées sur un substrat isolant 8. Cette membrane comporte une couche de matériau à forte permittivité 7. Deux lignes résistives 51 sont reliées à un plot de commande en tension 52. Ces lignes 51 sont suffisamment résistives pour empêcher la propagation du signal RF. Les extrémités des lignes 51 situées sous la membrane sont reliées à l'électrode de commande 5. On constitue ainsi un condensateur dont les armatures sont d'une part la membrane et d'autre part l'électrode de commande 5 en regard. Lorsque l'électrode de commande 5 ne génère pas de tension sous la membrane, celle-ci est au repos. La capacité du condensateur vaut alors une dizaine de femtofarads. Cette capacité très faible induit une impédance suffisamment importante entre les deux lignes conductrices pour qu'aucun signal ne puisse passer d'une ligne à l'autre. Le microcommutateur est ouvert.

Lorsque l'on soumet l'ensemble membrane - électrode à une tension croissante., la membrane 1 est soumise à une force électrostatique qui la déforme légèrement jusqu'à ce que la couche de matériau à forte permittivité 7 entre en contact avec les lignes conductrices 2 et 3. La capacité du condensateur dont les armatures sont constituées par la membrane et l'électrode de commande augmente environ d'un rapport cent. Cette capacité qui est maintenant de l'ordre du picofarad induit une impédance suffisamment faible entre les deux lignes pour que le signal puisse maintenant passer de la ligne d'entrée à la ligne de sortie. Le microcommutateur est fermé.

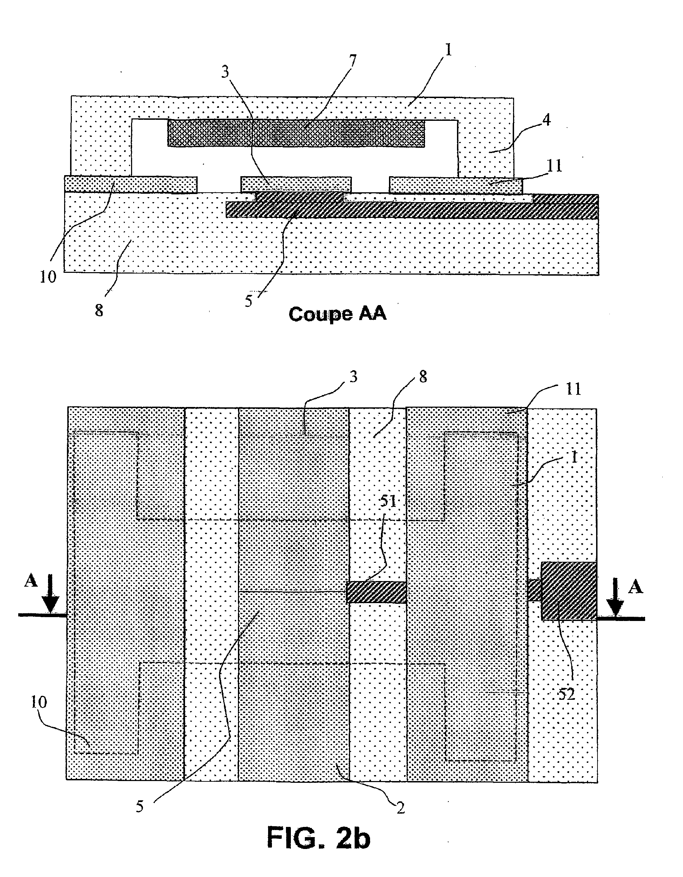

La figure 2b représente une vue en coupe et une vue de dessus du principe du dispositif dans le cas d'un microcommutateur de type parallèle. Sur la vue de dessus et par souci de clarté, seul le contour de la membrane est représenté en pointillés. Une membrane ou une poutre métallique épaisse 1 est maintenue suspendue par des supports 4 au-dessus d'une première ligne conductrice 2 dite ligne d'entrée et d'une seconde ligne conductrice 3 dite ligne de sortie disposées dans le prolongement l'une de l'autre sur un substrat isolant 8. Ce substrat comporte également deux lignes conductrices 10 et 11 parallèles entre elles et disposées de part et d'autre des lignes conductrices 2 et 3. Les dites lignes 10 et 11 sont reliées électriquement entre elles et reliées à une masse électrique. Cette membrane comporte une couche de matériau à forte permittivité 7. Une électrode de commande 5 est située sous les parties des lignes 2 et 3 en regard. Cette électrode 5 est reliée à un plot de commande en tension 52 par une ligne suffisamment résistive 51 pour empêcher la propagation du signal RF. On constitue ainsi un condensateur dont les armatures sont d'une part la membrane et d'autre part l'électrode de commande 5 en regard. Lorsque l'électrode de commande 5 ne génère pas de tension sous la membrane, celle-ci est au repos. La capacité du condensateur constitué est faible et ne perturbe pas le passage du signal de la ligne 2 vers la ligne 3, l'interrupteur est passant. Lorsque l'électrode de commande génère une tension suffisante pour abaisser la membrane, la capacité induit une impédance suffisamment faible pour court-circuiter le signal de la ligne 2 vers les lignes de masse 10 et 11. La ligne de sortie 3 du dispositif est alors isolée de la ligne d'entrée 2.

Les figures 3 à 9 représentent les différentes étapes de procédés de réalisation de microcommutateurs dans le cas où les microcommutateurs sont de type parallèle. Ces procédés s'appliquent également pour les commutateurs de type série qui diffèrent des précédents simplement par la disposition des lignes conductrices comme il est montré sur les figures 2a et 2b.

Les figures 3, 4, 5 et 6 représentent les différentes étapes du procédé de réalisation du microcommutateur de type parallèle selon un premier mode de réalisation.

La figure 3 représente une vue de dessus et deux vues en coupe AA et BB du premier sous-ensemble 100 avant assemblage. Le procédé de fabrication dudit premier sous-ensemble comporte typiquement les étapes suivantes :
- Réalisation sur un substrat 8 isolant, par exemple du verre ou du silicium isolant, de surépaisseurs 81 appelées mesas par gravure dudit substrat.
- Réalisation d'une couche de matériau isolant 9 de type silice sur la surface du substrat 8 comportant les mesas si celui-ci n'est pas suffisamment isolant. Cette couche peut être obtenue par dépôt ou par oxydation superficielle du substrat, notamment dans le cas d'un substrat en silicium.
- Réalisation simultanée des lignes de commande 51, du plot de commande 52, ainsi que de l'électrode de commande 5. Cette électrode de commande pourra éventuellement être recouverte par les lignes de signal d'entrée et de sortie 2 et 3. Les lignes, de commande 51 sont suffisamment résistives pour éviter la propagation du signal RF. Typiquement cette résistance est supérieure à cent ohm/carré.
- Dépôt d'une couche de matériau isolant 6 de type nitrure de silicium ou oxyde de silicium sur les lignes 51, et éventuellement l'électrode 5 et les mesas 81.
- Réalisation simultanée de :
   - deux lignes conductrices 10 et 11 implantées sur ledit substrat 8, dites lignes-masse, parallèles entre elles et reliées électriquement à une masse électrique. Les deux lignes conductrices sont réalisés typiquement par dépôt d'or. Leur largeur vaut environ cinquante microns et la distance les séparant environ cent cinquante microns.
   - deux lignes conductrices 2 et 3 placées entre les lignes-masse 10 et 11, parallèles auxdites lignes-masse, dans le prolongement l'une de l'autre. Selon la disposition choisie, ces lignes peuvent être en contact direct entre elles, elles recouvrent alors l'électrode 5, ou reliées électriquement au moyen de l'électrode 5 comme indiqué sur la figure 3. La première de ces lignes est dite signal d'entrée et la seconde de ces lignes est dite signal de sortie.
   - de couches de métal 14 de même type et de même épaisseur que celle des lignes conductrices, déposées sur les mesas précédemment créées.

La figure 4 représente une vue en coupe des deux sous-ensembles avant assemblage. Le procédé de fabrication du second sous-ensemble 101 comporte typiquement les étapes suivantes :
- Réalisation d'un ensemble comprenant un second substrat 21, au moins une couche d'arrêt 18, la couche de matériau 15 servant de base à la réalisation de la membrane, préférentiellement de type SOI (silicium sur isolant).
- Dépôt sur ledit matériau 15 d'une couche 16 destinée à réaliser l'électrode supérieure du dispositif. Cette couche peut être en alliage de titane ou de platine.
- Dépôt d'une couche de matériau diélectrique 7 à forte permittivité, placée sur l'électrode précédemment réalisée. Cette couche est typiquement d'une épaisseur de l'ordre du micron. Elle est gravée de telle façon que la zone couverte de diélectrique soit placée en regard de l'électrode 5. Cette couche est également déposée sur les zones en regard des mesas.
- Eventuellement, une seconde couche métallique 17 est déposée sur la première couche 16 pour diminuer la résistance série du conducteur ainsi réalisé.

La figure 5 représente une vue en coupe des mêmes deux sous-ensembles après assemblage par soudure. Celle-ci est de type eutectique : une couche d'alliage eutectique 19, par exemple de type Sn/Au, est déposée sur les lignes conductrices 10 et 11 aux endroits où doit s'effectuer la soudure. Au cours de cette opération, la couche d'alliage 19 assure la liaison électrique et mécanique entre les lignes-masse et l'électrode 16 du sous-ensemble 101. La distance entre les deux sous-ensembles 100 et 101 est déterminée par l'empilage de matériaux au niveau des mesas qui servent d'arrêt mécanique. En finale, la distance entre l'électrode de commande 5 et la couche de diélectrique 7 est égale à la hauteur des mesas 81. Il est à noter que la couche d'alliage 19 qui est molle au moment de l'opération de soudure ne perturbe pas la distance entre l'électrode de commande 5 et la couche de diélectrique 7. Ce procédé permet de contrôler précisément cette distance qui détermine la tension de commande du dispositif.

La figure 6 représente trois vues du microcommutateur après assemblage et découpe finale. Les opérations de découpe suivantes ont été effectuées :
- Suppression du substrat 21 jusqu'à la couche de silice enterrée 18. L'épaisseur résultante de la plaque supérieure de silicium est alors de l'ordre de 2 à 10 microns. Par photolithographie et gravure du silicium, on définit alors la géométrie finale de la membrane.
- Suppression éventuelle de la partie comprenant les mesas 81, qui n'ont pas de fonctionnalité en dehors d'assurer l'espacement des deux sous-ensembles durant la fabrication des dispositifs.

Les figures 7, 8 et 9 représentent les différentes étapes du procédé de réalisation d'un microcommutateur de type parallèle dans un second exemple.

La figure 7 représente une vue en coupe du premier sous-ensemble 100 savant assemblage. Le procédé de fabrication dudit premier sous-ensemble comporte typiquement les étapes suivantes :
- Réalisation simultanée de la ligne de commande 51, du plot de commande 52, ainsi que de l'électrode de commande 5. Cette électrode de commande pourra éventuellement être recouverte par les lignes de signal d'entrée et de sortie 2 et 3. La ligne de commande 51 est suffisamment résistive pour éviter la propagation du signal RF. Typiquement cette résistance est supérieure à cent ohm/carré.
- Dépôt d'une couche de matériau isolant 6 de type nitrure de silicium ou oxyde de silicium recouvrant les lignes 51, et éventuellement partiellement l'électrode 5.
- Réalisation simultanée de :
   - deux lignes conductrices 10 et 11 implantées sur ledit substrat 8, dites lignes-masse, parallèles entre elles et reliées électriquement à une masse électrique. Les deux lignes conductrices sont réalisées typiquement par dépôt d'or. Leur largeur vaut environ cinquante microns et la distance les séparant environ cent cinquante microns.
   - deux lignes conductrices 2 et 3 placées entre les lignes-masse 10 et 11, parallèles auxdites lignes-masse, dans le prolongement l'une de l'autre. Selon la disposition choisie, ces lignes peuvent être en contact direct entre elles (elles recouvrent alors l'électrode 5), ou reliées électriquement au moyen de l'électrode 5. La première de ces lignes est dite signal d'entrée et la seconde de ces lignes est dite signal de sortie.
   - Dépôt par électrolyse sur la partie des lignes 10 et 11 en regard avec l'électrode supérieure d'un métal 20 déformable. Ce métal peut être un eutectique de type Au/Sn ou simplement de l'or. Ce matériau est déformé lors du processus de soudure des deux sous-ensembles.

La figure 8 représente une vue en coupe du second sous-ensemble 101 avant assemblage. Le procédé de fabrication du second sous-ensemble comporte typiquement les étapes suivantes :
- Réalisation d'un ensemble comprenant un second substrat 21, au moins une couche d'arrêt 18, la couche de matériau 15 servant de base à la réalisation de la membrane, préférentiellement de type SOI (silicium sur isolant).
- Gravure du second substrat 15, de façon à réaliser les piliers d'accrochage de la membrane.
- Dépôt d'une couche métallique 16 , par exemple de Ti/Pt, destinée à réaliser l'électrode supérieure du dispositif.
- Dépôt d'une couche de matériau diélectrique 7 à forte permittivité, placée sur l'électrode précédemment réalisée. Cette couche est typiquement d'une épaisseur de l'ordre du micron. Eventuellement, une seconde couche métallique 17 est déposée sur la première pour diminuer la résistance série du conducteur ainsi réalisé.

La figure 9 représente une vue de dessus et deux vues en coupe AA et BB perpendiculaires entre elles du microcommutateur finalisé après assemblage. Le procédé d'assemblage et de finition comprend les étapes suivantes :
- Soudure des deux sous-ensembles par soudure anodique, la zone de scellement se trouvant au niveau des piliers. Au cours de cette opération, le métal 20 assure la liaison électrique entre les lignes-masse et l'électrode 16 de la membrane, il se trouve légèrement aplati. La distance entre la membrane et l'électrode de commande est alors déterminée par la profondeur de gravure des piliers.
- Suppression du substrat 21 jusqu'à la couche de silice enterrée 18. L'épaisseur résultante de la plaque supérieure de silicium est alors de l'ordre de 2 à 10 microns. Par photolithographie et gravure du silicium, on définit alors la géométrie finale de la membrane.

Pour les deux procédés de réalisation présentés, la forme de l'électrode mobile n'est représentée qu'à titre d'exemple ; d'autres formes sont possibles (rondes, rectangulaires...) ainsi qu'une grande variété de points d'attache (deux points d'ancrage comme indiqué sur les figures, un seul point d'ancrage pour les membranes de type poutre cantilever ou un nombre quelconque de points...). On peut également réaliser une membrane de forme plus complexe, par exemple pour commuter simultanément plusieurs lignes de signal pour former des dispositifs de type « Single Pole Single Throw » (une commande - un interrupteur), « Single Pole Double Throw » (une commande - deux interrupteurs), ou « Multiple Pole Multiple Throw » (plusieurs commandes - plusieurs interrupteurs).

La différence majeure entre les deux procédés est que, dans le cas du second procédé, la zone de scellement entre les deux sous-ensembles n'assure que la liaison mécanique, la liaison électrique se faisant au niveau des zones où est déposé le métal 20. L'avantage principal de cette méthode est que le scellement anodique permet d'obtenir une liaison plus solide.

Quelque soit le procédé de réalisation, le principe de fonctionnement du microcommutateur de.type parallèle est le suivant ;

Lorsque l'électrode de commande 5 ne génère pas de tension sous la membrane, celle-ci est au repos. La capacité C_{off} du condensateur dont les armatures sont constituées par la membrane et l'électrode de commande vaut alors une dizaine de femtofarads. Cette capacité très faible n'influe pas la transmission du signal entre les lignes 2 et 3 reliées au niveau de l'électrode 5. L'interrupteur est fermé.

Lorsque l'électrode de commande 5 génère une tension suffisante sous la membrane:, celle-ci se déforme et la couche diélectrique 7 placée sur sa partie inférieure entre en contact avec l'électrode de commande 5. La capacité Cₒₙ du condensateur dont les armatures sont constituées par la membrane et l'électrode de commande augmente environ d'un rapport cent. Cette capacité qui est maintenant de l'ordre du picofarad induit une impédance suffisamment faible pour que le signal soit court-circuité à la masse. Il s'écoule alors de la ligne d'entrée 2 aux lignes de masses 10 et 11 à travers la membrane. Les lignes d'entrées et de sortie 2 et 3 sont alors isolées.

L'utilisation d'un matériau 7 à forte permittivité diélectrique permet de garder un rapport Cₒₙ/C_{off} très élevé tout en ayant un espace très faible entre les deux électrodes, ce qui autorise l'utilisation d'une tension de commande relativement faible, de quelques volts à quelques dizaines de volts.

## Revendications

1. Procédé de réalisation d'un microcommutateur, **caractérisé en ce qu'**il comporte au moins les étapes suivantes :
• Réalisation d'un premier sous-ensemble (100) comportant un premier substrat (8) et au moins des lignes conductrices (2, 3, 5 10 et 11) comportant deux lignes dites lignes-masse (10, 11) et une électrode de commande (5), le substrat (8) comportant des surépaisseurs appelées mesa (81) et une couche conductrice (19) déposée sur les lignes-masse (10, 11), chaque mésa étant recouverte d'une épaisseur (14) de métal identique à celle desdites lignes conductrices (2, 3, 5, 10 et 11) ;
• Réalisation d'un second sous-ensemble (101) comportant un second substrat (21), au moins une couche d'arrêt (18), une couche de matériau (15), au moins une couche électriquement conductrice (16, 17) et au moins une couche de matériau diélectrique (7) à haute permittivité, la couche conductrice (16, 17) soutenant en regard desdits mesas (81) du premier sous-ensemble des surépaisseurs (12) réalisées dans le même matériau que ladite couche de matériau diélectrique (7) à haute permittivité et d'épaisseur identique ;
• Assemblage mécanique et électrique des deux sous-ensembles (100, 101) par soudure de ladite couche conductrice (19) déposée sur lesdites lignes-masse (10, 11) du premier sous-ensemble (100) avec ladite couche conductrice (16) du second sous-ensemble (101) ;
• Suppression du second substrat (21) jusqu'à la couche d'arrêt (18) ;
• Découpe finale de la couche (15) aux dimensions d'une membrane (1) par photolithographie et gravure.

2. Procédé de réalisation d'un microcommutateur selon la revendication 1, **caractérisée en ce que** la couche à haute permittivité est déposée par un procédé sol-gel ou à pulvérisation cathodique.

3. Procédé de réalisation d'un microcommutateur selon la revendication 1, **caractérisé en ce que**, pour un microcommutateur de type parallèle comprenant, sur le premier sous-ensemble (100), deux lignes conductrices dites lignes-masse (10, 11) situées sur le substrat isolant (8), parallèles entre elles et reliées électriquement à une masse électrique ; une ligne conductrice (2) dite signal d'entrée placée entre les lignes-masse (10,11), parallèle auxdites lignes-masse ; une ligne conductrice (3) dite signal de sortie placée dans le prolongement de la ligne signal d'entrée (2) et entre les lignes-masse (10, 11), parallèle auxdites lignes-masse et une électrode de commande (5) située sur ledit substrat dont une des extrémités relie électriquement les lignes signal d'entrée (2) et signal de sortie (3), l'assemblage des deux sous-ensembles (100, 101) est réalisé par dépôt et soudure d'un alliage eutectique (19) entre les lignes de masse (10, 11) et les couches conductrices (16, 17), les surépaisseurs (12) reposant sur les mesas (81).

4. Procédé de réalisation d'un microcommutateur selon la revendication 3, **caractérisé en ce que** l'alliage eutectique est du type Or/Etain.

5. Procédé de réalisation d'une pluralité de microcommutateurs selon la revendication 1, **caractérisé en ce qu'**une pluralité de sous-ensembles (100) sont réalisés sur un substrat (8) commun, une pluralité de sous-ensembles (101) sont réalisés sur un substrat (21) commun, l'opération d'assemblage étant commune aux différents sous-ensembles (100, 101), l'ensemble obtenu étant ensuite découpé pour obtenir une pluralité de microcommutateurs élémentaires.

## Patentansprüche

1. Verfahren zum Erzeugen eines Mikroschalters, **dadurch gekennzeichnet, dass** es mindestens die folgenden Schritte beinhaltet:
• Erzeugen einer ersten Unterbaugruppe (100), die Folgendes umfasst: ein erstes Substrat (8) und wenigstens leitende Leitungen (2, 3, 5, 10 und 11), umfassend zwei Leitungen, Masseleitungen (10, 11) genannt, und eine Steuerelektrode (5), wobei das Substrat (8) Überdicken hat, Mesas (81) genannt, und eine auf die Masseleitungen (10, 11) abgesetzte leitende Schicht (19), wobei jede Mesa mit einer Metalldicke (14) beschichtet ist, die mit der der leitenden Leitungen (2, 3, 5, 10 und 11) identisch ist;
• Erzeugen einer zweiten Unterbaugruppe (101), die Folgendes umfasst: ein zweites Substrat (21), wenigstens eine Stoppschicht (18), eine Materialschicht (15), wenigstens eine elektrisch leitende Schicht (16, 17) und wenigstens eine Schicht aus dielektrischem Material (7) mit hoher Permittivität, wobei die leitende Schicht (16, 17) gegenüber den Mesas (81) der ersten Unterbaugruppe Überdicken (12) trägt, die aus demselben Material erzeugt sind wie die Schicht aus dielektrischem Material (7) mit hoher Permittivität und von identischer Dicke sind;
• mechanisches und elektrisches Montieren der zwei Unterbaugruppen (100, 101) durch Verlöten der auf die Masseleitungen (10, 11) der ersten Unterbaugruppe (100) abgesetzten leitenden Schicht (19) mit der leitenden Schicht (16) der zweiten Unterbaugruppe (101);
• Entfernen des zweiten Substrats (21) bis zu der Stoppschicht (18);
• endgültiges Zuschneiden der Schicht (15) auf die Abmessungen einer Membran (1) durch Fotolithographie und Ätzen.

2. Verfahren zum Erzeugen eines Mikroschalters nach Anspruch 1, **dadurch gekennzeichnet, dass** die Schicht mit hoher Permittivität mit einem Sol-Gel- oder Kathodenzerstäubungsverfahren abgesetzt wird.

3. Verfahren zum Erzeugen eines Mikroschalters nach Anspruch 1, **dadurch gekennzeichnet, dass** für einen Mikroschalter des parallelen Typs, der Folgendes umfasst: auf der ersten Unterbaugruppe (100) zwei leitende Leitungen, Masseleitungen (10, 11) genannt, die sich auf dem isolierenden Substrat (8) parallel zueinander und elektrisch mit elektrischer Masse verbunden befinden, eine leitende Leitung (2), Eingangssignalleitung genannt, plaziert zwischen den Masseleitungen (10, 11) parallel zu den Masseleitungen, eine leitende Leitung (3), Ausgangssignalleitung genannt, plaziert in der Verlängerung der Eingangsssignalleitung (2) und zwischen den Masseleitungen (10, 11), parallel zu den Masseleitungen, und eine auf dem Substrat befindliche Steuerelektrode (5), wobei eines der Enden der Steuerelektrode die Eingangssignalleitung (2) und die Ausgangssignalleitung (3) elektrisch verbindet; die Montage der beiden Unterbaugruppen (100, 101) durch Absetzen und Verlöten einer eutektischen Legierung (19) zwischen den Masseleitungen (10, 11) und den leitenden Schichten (16, 17) erfolgt, wobei die Überdicken (12) auf den Mesas (81) ruhen.

4. Verfahren zum Erzeugen eines Mikroschalters nach Anspruch 3, **dadurch gekennzeichnet, dass** die eutektische Legierung vom Gold/Zinn-Typ ist.

5. Verfahren zum Erzeugen mehrerer Mikroschalter nach Anspruch 1, **dadurch gekennzeichnet, dass** mehrere Unterbaugruppen (100) auf einem gemeinsamen Substrat (8) erzeugt werden, mehrere Unterbaugruppen (101) auf einem gemeinsamen Substrat (21) erzeugt werden, wobei der Montagevorgang den unterschiedlichen Unterbaugruppen (100, 101) gemeinsam ist, wobei die erhaltene Baugruppe dann ausgeschnitten wird, um mehrere elementare Mikroschalter zu erhalten.

## Claims

1. A method for producing a micro-switch, **characterised in that** it comprises at least the following steps:
• producing a first sub-assembly (100) comprising a first substrate (8) and at least conducting lines (2, 3, 5, 10 and 11) comprising two lines, called ground lines (10, 11), and a control electrode (5), said substrate (8) having overthicknesses, called mesas (81), and a conducting layer (19) deposited on said ground lines (10, 11), each mesa being coated with a metal thickness (14) identical to that of said conducting lines (2, 3, 5, 10 and 11);
• producing a second sub-assembly (101) comprising a second substrate (21), at least one stop layer (18), a layer of material (15), at least one electrically conducting layer (16, 17) and at least one layer of high permittivity dielectric material (7), said conducting layer (16, 17) supporting, opposite said mesas (81) of said first sub-assembly, overthicknesses (12) produced from the same material as said layer of high permittivity dielectric material (7) and of identical thickness;
• mechanical and electrical assembly of said two sub-assemblies (100, 101) by soldering said conducting layer (19) deposited onto said ground lines (10, 11) of said first sub-assembly (100) with said conducting layer (16) of said second sub-assembly (101);
• removing said second substrate (21) up to the stop layer (18);
• final cutting of said layer (15) to the dimensions of a membrane (1) by photolithography and etching.

2. The method for producing a micro-switch according to claim 1, **characterised in that** said high permittivity layer is deposited by a sol-gel or cathode sputtering method.

3. The method for producing a micro-switch according to claim 1, **characterised in that**, for a micro-switch of the parallel type comprising, on said first sub-assembly (100), two conducting lines, called ground lines (10, 11), located on said isolating substrate (8), parallel to each other and electrically connected to an electrical ground, a conducting line (2), called input signal line, placed between said ground lines (10, 11), parallel to said ground lines, a conducting line (3), called output signal line, placed in the extension of said input signal line (2) and between said ground lines (10, 11), parallel to said ground lines, and a control electrode (5) located on said substrate, with one of the ends of said control electrode electrically connecting said input signal (2) line with said output signal (3) line, the assembly of said two sub-assemblies (100, 101) is realised by depositing and soldering a eutectic alloy (19) between said ground lines (10, 11) and said conducting layers (16, 17), said overthicknesses (12) resting on said mesas (81).

4. The method for producing a micro-switch according to claim 3, **characterised in that** said eutectic alloy is of the gold/tin type.

5. The method for producing a plurality of micro-switches according to claim 1, **characterised in that** a plurality of sub-assemblies (100) is produced on a common substrate (8), a plurality of sub-assemblies (101) is produced on a common substrate (21), with the assembly operation being common to the different sub-assemblies (100, 101), the assembly obtained then being cut out in order to obtain a plurality of elementary micro-switches.
